(19) Europäisches Patentamt
European Patent Office
Office européen des brevets

(11) **EP 4 653 911 A1**

(12) **EUROPEAN PATENT APPLICATION**

(43) Date of publication:
**26.11.2025 Bulletin 2025/48**

(21) Application number: **25176121.9**

(22) Date of filing: **13.05.2025**

(51) International Patent Classification (IPC):
**G01S 7/40** $^{(2006.01)}$     **G01S 13/02** $^{(2006.01)}$
**G01S 13/931** $^{(2020.01)}$

(52) Cooperative Patent Classification (CPC):
**G01S 7/4004; G01S 7/4017; G01S 7/4026;
G01S 13/0209; G01S 13/931**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **20.05.2024 US 202463649722 P
01.11.2024 US 202418934824**

(71) Applicant: **Aptiv Technologies AG
8200 Schaffhausen (CH)**

(72) Inventors:
• **LI, Zhengzheng
Agoura Hills (US)**
• **KOEPKE, Sean
West Hills (US)**
• **AHMED, Ammar
Westlake Village (US)**
• **LI, Mingjian
Agoura Hills (US)**

(74) Representative: **Lewis Silkin LLP
Arbor
255 Blackfriars Road
London SE1 9AX (GB)**

(54) **ULTRA-WIDEBAND COMPENSATION AND PROCESSING FOR MIMO RADAR SYSTEMS**

(57)     A method includes determining a line length of an antenna channel. The method includes determining a phase response of a signal associated with the antenna channel. The method includes determining whether the phase response has met a set of linearization criteria. The method includes, in response to a determination that the phase response has met the set of linearization criteria, applying a linear shift to the phase response. The method includes determining whether the signal is a first or a second signal type. The method includes, in response to a determination that the signal is the first type, encoding the signal with the compensation adjustment before the signal is transmitted. The method includes, in response to a determination that the signal is the second type, applying the compensation adjustment to the signal by applying the compensation adjustment during FFT processing or by applying a circular shift.

Radar System

112 — 108

Radar System 108

Antenna Array 136

Transceiver 140

Processor Hardware 144

Memory Hardware 148

Radar Software 152

**FIG. 1**

EP 4 653 911 A1

**Description**

CROSS-REFERENCE TO RELATED APPLICATIONS

This application claims the benefit of U.S. Provisional Application No. 63/649,722 filed May 20, 2024.

FIELD

The present disclosure relates to signal processing and more particularly to phase and range determination (USPC Class 342).

BACKGROUND

Phase estimation is useful in a variety of technical applications, such as frequency estimation and angle estimation for radar-based object tracking. Frequency estimation can be used to determine the distance (and in some implementations, the velocity) of an object from the radar system (specifically, the distance from the radar system sensor array). Based on the frequency estimation, the differences between the detected and transmitted signal are determined and used to calculate the distance to the object and the object's velocity.

In various implementations, angle estimation may be used to determine the angular location of an object with respect to the radar system. Angle estimation relies on spatial differences between two more elements in the radar sensor array. By measuring the difference in arrival time of a detected signal at the sensor elements, the direction of arrival of the radar signal can be calculated.

In comparison to other types of sensors, such as cameras, radars provide improved performance in difficult environmental conditions, such as low lighting, fog, and/or with moving or overlapping objects. Accordingly, radars provide many advantages for driver assistance applications and/or autonomous driving applications, among others.

The background description provided here is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

SUMMARY

A method includes determining a line length of an antenna channel. The method includes, based on the line length, determining a phase response of a signal associated with the antenna channel. The method includes, determining whether the phase response has met a set of linearization criteria. The method includes, in response to a determination that the phase response has met the set of linearization criteria, applying a linear shift to the phase response. The method includes determining whether the signal is a first signal type or a second signal type. The method includes, in response to a determination that the signal is the first signal type, applying a compensation adjustment to the signal by encoding the signal with the compensation adjustment before the signal is transmitted. The method includes, in response to a determination that the signal is the second signal type, applying the compensation adjustment to the signal by determining, before transmitting the signal, whether an antenna associated with the antenna channel has met a set of transmission criteria. The method includes, in response to a determination that the antenna has met the set of transmission criteria, applying the compensation adjustment during FFT processing. The method includes, in response to a determination that the antenna has not met the set of transmission criteria, applying the compensation adjustment by applying a circular shift.

In other features, the first signal type is an ultra-wideband (UWB) slow-time signal and the second signal type is an UWB fast-time signal. In other features, the line length is a length of a routing line of a radar system and antenna radiator. In other features, the set of linearization criteria includes at least one of a criterion that is met when a phase response is not linear, or a change in wavelength of the signal is not linear.

In other features, a UWB slow-time signal includes a first set of signal pulses. Each pulse of the first set of signal pulses is a first duration, is separated by a second duration, begins at a first frequency, and ends at a second frequency. In other features, a UWB fast-time signal includes a second set of signal pulses. Each pulse of the second set of signal pulses is a third duration, is separated by a fourth duration, and is a different frequency than a previous pulse.

In other features, the antenna channel is part of a radar antenna, and the signal is transmitted and received by the antenna channel. In other features, linearization includes performing an FFT, and performing a least square estimate. In other features, the set of transmission criteria includes a criterion that is met when a radar system associated with the antenna channel is a time division multiplexing system. In other features, the compensation adjustment aligns signals of the antenna channel and the signals of a second antenna channel.

A method includes receiving a signal. The method includes determining a line length of an antenna channel associated with the signal. The method includes, based on the line length, determining a phase response of the signal. The method includes determining whether the phase response has met a set of linearization criteria. The method includes, in response to a determination that the phase response has met the set of linearization criteria, applying a linear shift to the phase response. The method includes applying a compensation adjustment based on the phase response to the signal.

A system includes memory hardware configured to store instructions and processor hardware configured to execute the instructions. The instructions include determining a line length of an antenna channel. The instructions include, based on the line length, determining a phase response of a signal associated with the antenna channel. The instructions include determining whether the phase response has met a set of linearization criteria. The instructions include in response to a determination that the phase response has met the set of linearization criteria, applying a linear shift to the phase response. The instructions include determining whether the signal is a first signal type or a second signal type. The instructions include, in response to a determination that the signal is the first signal type, applying a compensation adjustment to the signal by encoding the signal with the compensation adjustment before the signal is transmitted. The instructions include, in response to a determination that the signal is the second signal type, applying the compensation adjustment to the signal by determining, before transmitting the signal, whether an antenna associated with the antenna channel has met a set of transmission criteria. The instructions include, in response to a determination that the antenna has met the set of transmission criteria, applying the compensation adjustment during FFT processing. The instructions include, in response to a determination that the antenna has not met the set of transmission criteria, applying the compensation adjustment by applying a circular shift.

In other features, first signal type is an ultra-wideband (UWB) slow-time signal. In other features, the second signal type is an UWB fast-time signal. In other features, the line length is a length of a routing line of a radar system and antenna radiator. In other features, the set of linearization criteria includes at least one of a criterion that is met when a phase response is not linear, or a change in wavelength of the signal is not linear.

In other features, a UWB slow-time signal includes a first set of signal pulses. Each pulse of the first set of signal pulses is a first duration, is separated by a second duration, begins at a first frequency, and ends at a second frequency. In other features, a UWB fast-time signal includes a second set of signal pulses. Each pulse of the second set of signal pulses is a third duration, is separated by a fourth duration, and is a different frequency than a previous pulse.

In other features, the antenna channel is part of a radar antenna, the signal is transmitted and received by the antenna channel, and linearization includes performing an FFT, and performing a least square estimate. In other features, the set of transmission criteria includes a criterion that is met when a radar system associated with the antenna channel is a time division multiplexing system. In other features, the compensation adjustment aligns signals of the antenna channel and the signals of a second antenna channel.

A system includes memory hardware configured to store instructions and processor hardware configured to execute the instructions. The instructions include receiving a signal. The instructions include determining a line length of an antenna channel associated with the signal. The instructions include, based on the line length, determining a phase response of the signal. The instructions include determining whether the phase response has met a set of linearization criteria. The instructions include, in response to a determination that the phase response has met the set of linearization criteria, applying a linear shift to the phase response. The instructions include, applying a compensation adjustment based on the phase response to the signal.

A non-transitory computer-readable medium stores processor-executable instructions. The instructions include determining a line length of an antenna channel. The instructions include, based on the line length, determining a phase response of a signal associated with the antenna channel. The instructions include determining whether the phase response has met a set of linearization criteria. The instructions include in response to a determination that the phase response has met the set of linearization criteria, applying a linear shift to the phase response. The instructions include determining whether the signal is a first signal type or a second signal type. The instructions include, in response to a determination that the signal is the first signal type, applying a compensation adjustment to the signal by encoding the signal with the compensation adjustment before the signal is transmitted. The instructions include, in response to a determination that the signal is the second signal type, applying the compensation adjustment to the signal by determining, before transmitting the signal, whether an antenna associated with the antenna channel has met a set of transmission criteria. The instructions include in response to a determination that the antenna has met the set of transmission criteria, applying the compensation adjustment during FFT processing. The instructions include, in response to a determination that the antenna has not met the set of transmission criteria, applying the compensation adjustment by applying a circular shift.

A non-transitory computer-readable medium stores processor-executable instructions. The instructions include receiving a signal. The instructions include determining a line length of an antenna channel associated with the signal. The instructions include, based on the line length, determining a phase response of the signal. The instructions include determining whether the phase response has met a set of linearization criteria. The instructions include, in response to a determination that the phase response has met the set of linearization criteria, applying a linear shift to the phase response. The instructions include, applying a compensation adjustment based on the phase response to the signal.

Further areas of applicability of the present disclosure will become apparent from the detailed description, the claims, and the drawings. The detailed description and specific examples are intended for purposes of illustration only and are not intended to limit the scope of the disclosure.

BRIEF DESCRIPTION OF THE DRAWINGS

The present disclosure will become more fully understood from the detailed description and the accompanying drawings.

FIG. 1 is a functional block diagram of an example radar system.

FIG. 2 is an example of an ultra-wideband fast-time signal.

FIGS. 3A-3B are examples of an ultra-wideband slow-time signal.

FIG. 4 is an example of beamvector construction for line length measurement.

FIG. 5 is an example of non-linear wavelengths and non-linear phase shift.

FIG. 6 is an example of phase shift linearization.

FIG. 7 is a functional block diagram of an example system for compensating ultra-wideband signals.

FIG. 8 is a flowchart of an example method of determining and applying ultra-wideband compensation to a transmitted signal.

FIG. 9 is a flowchart of an example method of determining and applying ultra-wideband compensation to a received signal.

In the drawings, reference numbers may be reused to identify similar and/or identical elements.

DETAILED DESCRIPTION

**INTRODUCTION**

Ultra-wideband (UWB) waveforms provide fine range resolution and accuracy in radar applications. UWB range resolution is so fine that the physical routing of the radar antennas can affect the determined distance between the radar system and a detected object (for example, in some radar systems the RX channels may detect a transmitted signal directly from the TX channels instead of detecting a reflection of the transmitted signal). This phenomenon gives UWB radars a minimum detection range. The minimum detection range is determined by direct coupling (DC) bias between the transmitter (TX) and receiver (RX) channels of the radar antenna system.

The present disclosure provides a method for compensating for radar routing lines in multiple-input multiple-output (MIMO) radar systems when transmitting and receiving UWB radar signals. The compensation may account for some or all of routing inside the monolithic microwave integrated circuit (MMIC), the routing distance from the MIMO radar to the antenna(s), and the round trip distance from the antenna(s) to the target. In some implementations, each antenna routing line is the same length. Uneven routing lines can lead to range discrepancies for a single detected target. To determine the location of a detected object, the direction of arrival (DOA) of each signal is determined by analyzing the phase of each received signal, which may require each received signal related to the detected object to be in the same range bin.

**EXAMPLE RADAR SYSTEM**

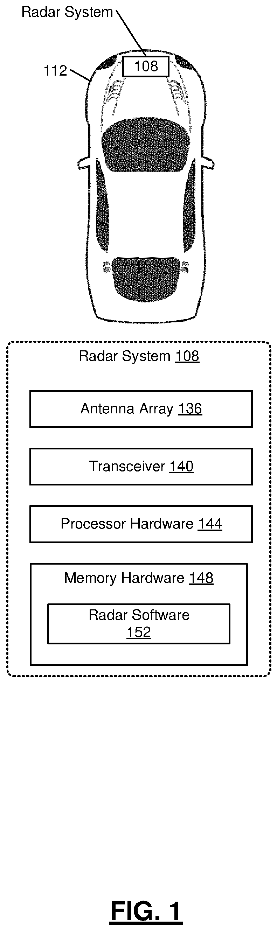

FIG. 1 is a high-level block diagram of radar system 108. Radar system 108 may be mounted to and/or integrated within vehicle 112. Radar system 108 is configured to detect one or more objects that are proximate to vehicle 112. In various implementations, radar system 108 may be a forward-looking radar system.

In various implementations, radar system 108 may be mounted to a top, underside, front side, rear side, left side, or right side of vehicle 112. In various implementations, radar system 108 includes multiple radar subsystems. For example, radar system 108 may include a first front-mounted radar subsystem positioned proximate a left side of vehicle 112 and a second front-mounted radar subsystem positioned proximate a right side of vehicle 112. In various implementations, location(s) of radar system 108 may be selected to provide a particular field of view that encompasses a region of interest in which one or more objects may be present. For example, a field of view may include a 360-degree field of view, one or more 180-degree fields of view, and/or one or more 90-degree fields of view.

In various implementations, vehicle 112 may include one or more systems that use data provided by radar system 108. For example, vehicle 112 may include a driver assistance system and/or an autonomous driving system. The driver assistance system may use data provided by radar system 108 to monitor one or more blind spots of vehicle 112 and/or alert a driver of vehicle 112 of a potential collision with an object. The autonomous driving system may use the data provided by radar system 108 to drive vehicle 112, avoid collisions with objects, perform emergency braking, change lanes, and/or adjust a speed of vehicle 112, among others.

In various implementations, radar system 108 may include at least one antenna array 136 and at least one transceiver 140. In various implementations, radar system 108 may include processor hardware 144 and memory hardware 148. The memory hardware 148 may include radar software 152. In various implementations, radar software 152 may be configured to analyze radar signals, detect one or more objects, and/or determine one or more characteristics (such as position and/or velocity) of the objects. In various implementations, radar software is fully or partially implemented in hardware.

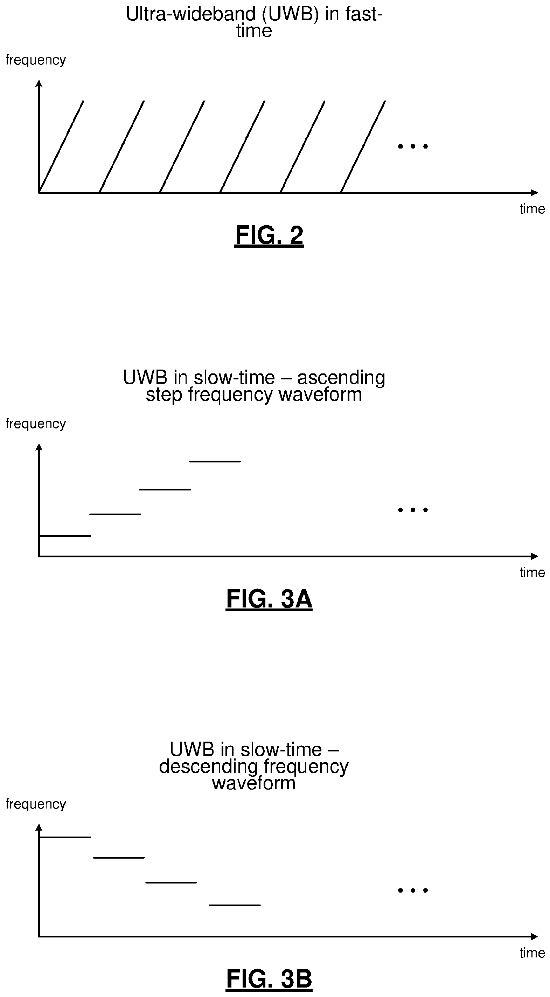

Automotive radar systems frequently use two types of UWB waveforms: fast-time and slow-time. As seen in FIG. 2, UWB in fast-time is defined as a series of frequency modulated pulses and is used to measure range to a detected object. As seen in FIGS. 3A-3B, UWB in slow-time is a step frequency waveform (either ascending, descending, or random hopping). UWB in slow-time is used to measured Doppler and velocity of a detected object.

## ESTIMATING LINE LENGTHS

The first step of UWB compensation requires calculating the routing line lengths. The routing line lengths can be calculated by simulation or by physical measurement. The routing line lengths can be measured in chamber by aligning the radar to the target at 0 azimuth and 0 elevation ([0,0]). However, errors can arise if the antenna is misaligned and physical measurement cannot compensate for the range bias that may be present from the routing line. Differences in angle (deviations from [0,0]) and routing line material (which affects the signal wavelength represented as lambda) lead to frequency shifts in both UWB fast-time and UWB slow-time response. However, perfect alignment at [0,0] eliminates the frequency shifts based on misalignment. Measuring the routing lengths physically can be performed by either 1) manually aligning all channels and measuring the frequency shifts, or 2) constructing a beamvector (a vector of antenna array responses) from each channel in the radar array when at [0,0].

When manually aligning all channels, one channel is selected as a reference (ideally the channel with the shortest routing line length). Next, the channels are manually aligned with the reference channel to determine the frequency shift between the reference channel and each other channel. Then the phase is estimated to compensate for the shift in each channel. However, this method is inaccurate in scenarios when the reference channel itself is frequency shifted. The wavelength of a signal in a waveguide (for example, a WR10 waveguide) can be given as

$$\lambda_{guide}^{(n)} \frac{c}{\sqrt{(f_c+n\Delta f)^2-\left(\frac{c}{2a}\right)^2}} \, ,$$

where n is the pulse (or chirp) number, $f_c$ is the chirp center frequency, $\Delta f$ is the change in center frequency between consecutive chirps, c is lightspeed in vacuum, and $a$ is the waveguide width. The above equation can be combined with the measured lengths to generate an estimate of the phase shift at each radar chirp (slow-time or fast-time) as

$$\mathbf{Z}^{(m,\, n)} = exp\left( j2\pi \mathbf{L}^{(m)}/\lambda_{guide}^{(n)}\right),$$

where $\mathbf{L}^{(m)}$ is the measured routing line length for virtual MIMO channel $m$. In some implementations, lambda is dependent on routing line material (such as waveguide, microstrip line, strip line, substrate integrated waveguide, coaxial cable, etc.) which effects travel speed of the microwave radar signals.

The antenna array response to a signal impinging on the antenna array is known as the array manifold. Given the relative distance of each antenna element and wavelength, the array manifold for a signal coming from angle $\theta$ can be formulated as $b_i(\theta) = exp\left(j2\pi d_i \frac{f_c}{c}\sin(\theta)\right)$ (which is also known as the ideal or desired manifold for the array).

When constructing a beamvector, the Fast Fourier Transform (FFT) of each channel is found. Next the peak of the FFT of each channel is given by

$$b_i(\theta) = exp\left(j2\pi d_i \frac{f_c}{c} sin(\theta)\right) . exp\left(j2\pi \frac{f_c}{c} L_i\right),$$

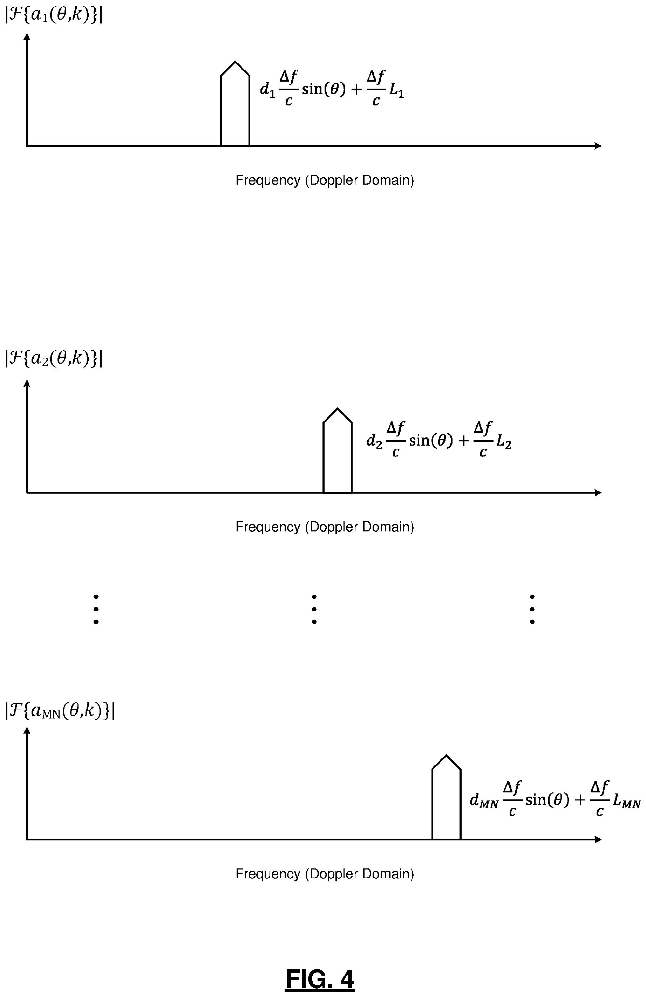

where ($b_i$) is the location of the peak frequency, $L_i$ is the routing line length for the $i$th antenna, $d_i$ is the relative distance between the $j$th antenna and the first antenna, $exp\left(j2\pi d_i \frac{f_c}{c} sin(\theta)\right)$ is the desired manifold and $exp\left(j2\pi \frac{f_c}{c} L_i\right)$ respresents additional phase. When the target is at 0 angle, $d_i \frac{\Delta f}{c} sin(\theta)$ can be ignored (because the array response for the target at 0 angle, $d_i \frac{\Delta f}{c} sin(\theta) = 0$ ), and the effect of transmission line lengths can be determined. $\frac{\Delta f}{c} L_i$ represents the phase shift of the difference channels, which remains constant irrespective of target angle ($\theta$). As shown in FIG. 4, the line lengths (including the MMIC line length and the antenna line length) can be estimated for each channel $x$ using peak detections on fine FFTs as ($|\mathcal{F}\{a_x(0, k)\}|$), where $a_x$ is the antenna response vector and $a_x(0, k)$ is the response of the kth antenna for the target at 0 degrees. Alternatively, if a 3D model of the antenna is available, the line lengths can be simulated. 3D simulation eliminates any potential error from misalignment, but this method cannot compensate for the bias in the range. With the 3D model, the phase difference for each channel can be determined based on the lambda (transmission wavelength) in each routing line. First, for $k = 1, 2, ... K$ antennas, the phase response $\varphi^{(h, k)}$ of each antenna at frequencies $f^{(h)}$ is simulated, where h = 1, 2, ..., $H$. Next the phase at antenna $k$ is measured relative to the start of the routing line from the MMIC.

The difference in phase between consecutive frequency measurements is given by

$$\Delta\varphi^{(h, k)} = \varphi^{(h+1, k)} - \varphi^{(h, k)}.$$

The wavelength in the waveguide can be modeled by:

$$\lambda_{guide}^{(h)} \frac{c}{\sqrt{f^{(h)2} - \left(\frac{c}{2a}\right)^2}},$$

where $f^{(h)}$ is signal's frequency, $c$ is lightspeed in vacuum, and $a$ is waveguide width.

The difference in waveguide wavelengths between consecutive frequency measurements is given by:

$$\Delta\lambda_{guide}^{(h)} = \lambda_{guide}^{(h+1)} - \lambda_{guide}^{(h)}.$$

The approximate phase shift difference between consecutive frequency measurements due to unknown routing line lengths $\boldsymbol{L}^{(k)}$ is given by:

$$\Delta\widehat{\varphi}^{(h, k)} = 2\pi\boldsymbol{L}^{(k)}/(\Delta\lambda_{guide}^{(h)}).$$

Using a conventional optimization function (for example, the least-squares estimator), the unknown line lengths $\boldsymbol{L}^{(k)}$ can be estimated by minimizing the expression:

$$\widehat{\boldsymbol{L}}^{(k)} = \min_{\boldsymbol{L}^{(k)}}\left[\sum_{h=1}^{H-1}\left(\Delta\varphi^{(h, k)} - \Delta\widehat{\varphi}^{(h, k)}\right)^2\right].$$

In some implementations, both methods (measurement and simulation) are used to confirm accuracy. In some implementations, after a compensation from simulation is obtained, the compensation is applied to the real measurement to confirm if the compensation is correct.

## LINEARIZED COMPENSATION

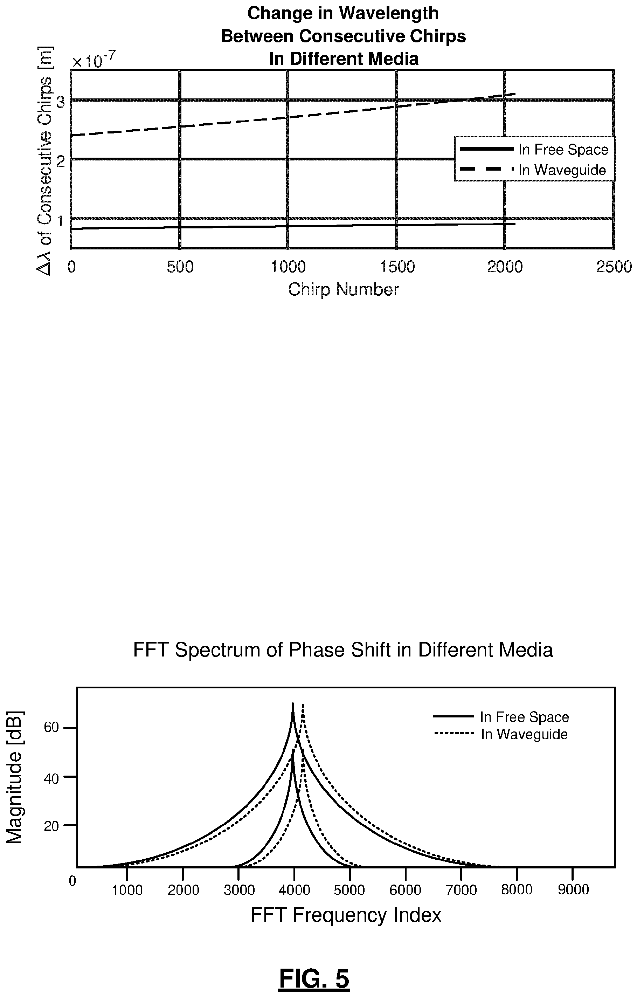

In some implementations, the change in wavelength in the waveguide between successive pulses is non-linear. As a result, the phase compensation at each frequency sample is also non-linear (such as parabolic as seen in FIG. 5). Linearization reduces memory usage and increases efficiency (both in power consumption and processing time). Linearization requires only the initial phase (the phase of the first pulse) and the delta phase (change in phase) to be saved. Compensation for the $k$th antenna can be defined as the initial phase summed with each successive change of phase: $(\varphi + (k - 1)\Delta\varphi)$. Computing the FFT spectrum of the phase-shift at each frequency sample $(\exp(j2\pi/\Delta\lambda_{guide}))$ shows most of the energy at a single frequency. Applying an FFT with a large number of points and a parabolic interpolation at the peak of the FFT results in a linear phase-shift estimate, from which $\Delta\hat{\lambda}_{lin}$ can be approximated. In the ranges frequently used in automatic radar applications the accuracy loss from linearization is negligible.

Using the approximated linear shift in wavelength between successive chirps in the waveguide, the phase shift due to routing-line lengths can be modeled as:

$$exp\left(\frac{j2\pi L^{(i)}}{\Delta\hat{\lambda}_{lin}}n\right),$$

where $n$ is the radar signal chirp number for chirps $n = 0, 1, ..., N$, and $L^{(i)}$ is the relative routing-line length for virtual channel $i = 1, 2, ... n_{Tx}n_{Rx}$.

The Doppler frequency bin shift due to transmission line length for Doppler FFT size $Q$ becomes:

$$Q_L^{(i)} = \frac{QL^{(i)}}{\Delta\hat{\lambda}_{lin}}.$$

A least square estimate between the measured and expected Doppler FFT peak locations can be carried out to obtain the relative routing-line lengths for all virtual channels and the linear phase compensation needed to minimize the peak spread in the Doppler spectrum for different channels. The relative routing-line lengths for all virtual channels can be given as:

$$\hat{L}^{(i)} = \min_{L^{(i)}}\left[\sum_{i=1}^{n_{Tx}n_{Rx}}\left(Q_L^{(i)} - \frac{QL^{(i)}}{\Delta\hat{\lambda}_{lin}}\right)^2\right].$$

The linear phase compensation needed to minimize the peak spread in the Doppler FFT spectrum for different channels can be given as:

$$\hat{Z}^{(i,\,n)} = exp\left(\frac{j2\pi n\hat{L}^{(i)}}{\Delta\hat{\lambda}_{lin}}\right)$$

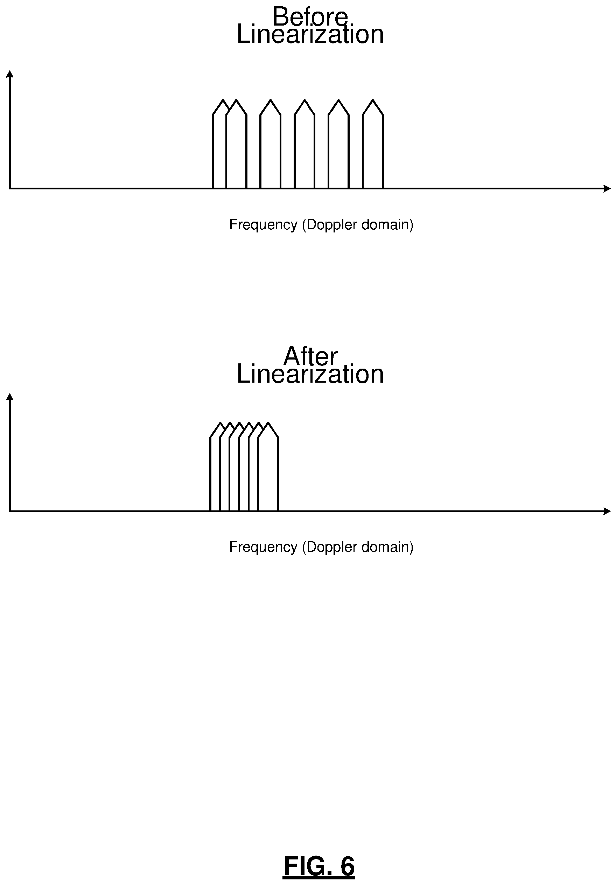

FIG. 6 is an example of signals from a MIMO radar with two TX channels and 3 RX channels transmitting in UWB slow-time (transmitting a step frequency wave). FIG. 6 shows the Doppler FFT peak spread for a single target case before and after the rout-line length compensation. After linearization the spread is not perfectly aligned, but the spread is localized to a single small cluster.

## COMPENSATION FOR UWB IN SLOW-TIME AND UWB FAST-TIME

When a MIMO radar is transmitting UWB pulses in slow-time, TX channel compensation is applied during the transmission process for each UWB signal pulse using a phase shift for each channel. In some implementations, the compensation is added to the MIMO Doppler division multiplexing (DDM) coding. In some implementations, DDM coding is a phase coding sequence used to shift TX channels to specific Doppler frequency locations. RX channel compensation is applied in the Doppler FFT window.

RX channels operating in UWB fast-time are also compensated in the Doppler FFT window. However, UWB fast-time TX channel compensation is performed after the TX channels are individually identified (or in other words, separated from the RX channels). In some implementations, the TX channel compensation is performed after MIMO processing. In some implementations, MIMO processing includes processing to separate the different TX channels from the RX channels. In some implementations, MIMO processing is dependent on the MIMO coding scheme (such as frequency division multiplex (FDM), code division multiplex (CDM), time division multiplex (TDM)). In some implementations, the MIMO radar system is a time division multiplex (TDM) system, which transmits each TX signal at a different time. This enables each TX channel to be compensated separately. In non-TDM systems an FFT is applied to the TX signal, a circular shift is applied, and the signal is interpolated. In some implementations, the TX signal is oversampled by zero padding the signal several times (for example, 2-4 times).

## BLOCK DIAGRAM

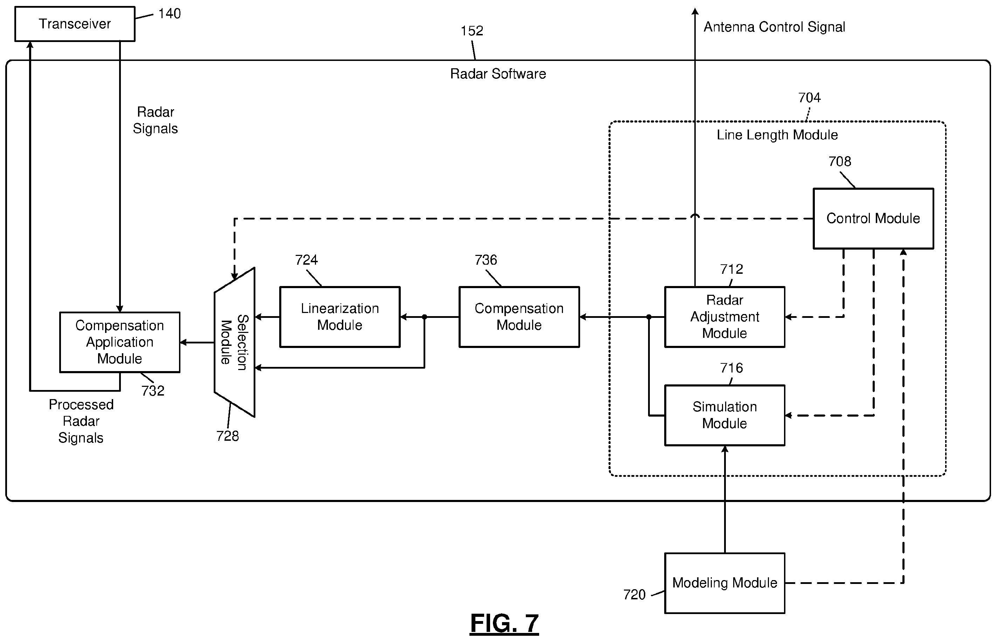

FIG. 7 is a functional block diagram of an example system for determining and applying compensation. Line length module 704 determines the line length for each channel and includes control module 708, radar adjustment module 712, and simulation module 716. Control module 708 sends a selection signal to selection module 728 based on whether a 3D model of the line lengths has been received from modeling module 720. In some implementations, modeling module 720 is not present and/or does not send a 3D model to simulation module 716 and/or control module 708. Control module 708 determines whether radar adjustment module 712 or simulation module 716 is used to determine line lengths based on whether a 3D model is received from modeling module 720.

Simulation module 716 calculates the line length via simulation. Radar adjustment module 712 aligns the radar system with the target. In some implementations, radar adjustment module 712 determines phase shifts between the channels once they have been aligned with a target and/or performs beamvector construction to determine the line length. Compensation module 736 determines the compensation based on the line length determined in line length module 704. Linearization module 724 linearizes the compensation. Selection module 728 selects between the linearized compensation from linearization module 724 or the non-linearized compensation from compensation module 736 based on the control signal from control module 708. In some implementations, the selection is based on whether the line lengths were determined by simulation or measurement. Selection module 728 selects the linearized compensation if the line lengths were determined via simulation or if the wavelength and/or phase is non-linear. Compensation module 732 applies the compensation to TX signals and RX signals which are sent and received from transceiver 140.

## FLOWCHARTS

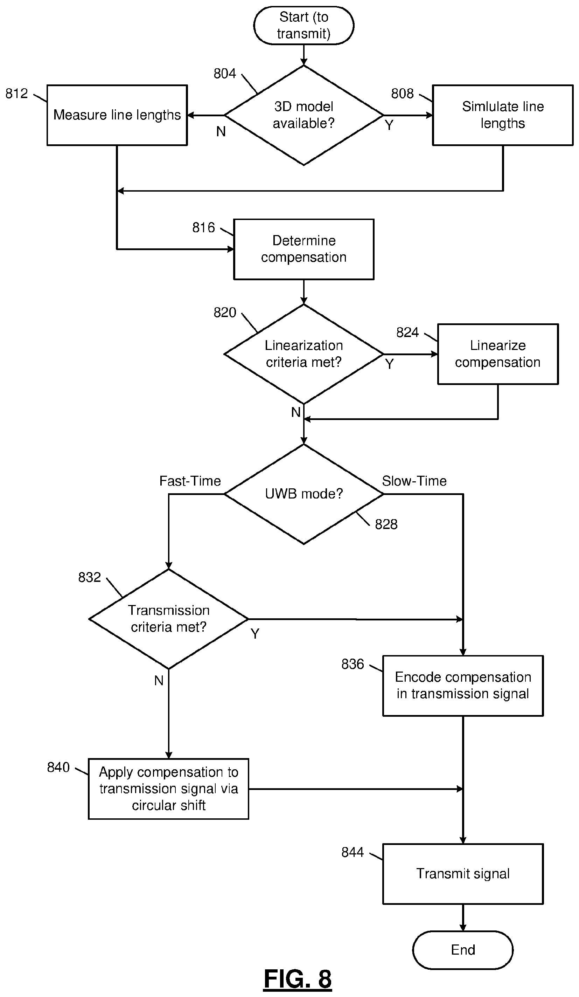

FIG. 8 is a flowchart of a method of determining and applying ultra-wideband compensation to a transmitted signal. Control begins at 804 and determines whether a 3D model of the routing lines is available. If a 3D model is available, control transfers to 808 and determines the line lengths via simulation. If no 3D model is available, control transfers to 812 and measures the line lengths (and/or determines the line lengths based on measurements taken by aligning the radar channels with a detected target). At 816, control determines the compensation. At 820, control determines whether one or more linearization criteria have been met (such as whether the line lengths were simulated, or the wavelength and/or phase shift is non-linear). If no linearization criteria have been met, control transfers to 828. If one or more linearization criteria have been met, control transfers to 824. At 824 the compensation is linearized and control continues to 828. At 828, control determines whether the radar system is transmitting in UWB fast-time mode or UWB slow-time mode. If the radar system is transmitting in UWB slow-time mode, control transfers to 836. If the radar system is transmitting in UWB fast-time mode, control transfers to 832. At 836, control encodes the compensation in the transmission signal and proceeds to 844. At 832, control determines whether transmission criteria have been met (such as whether the radar system is a TDM system). If the transmission criteria have been met, control transfers to 836. If the transmission criteria have not been met, control transfers to 840. At 840 control applies the compensation to the transmission signal via circular shift. At 844 the signal is transmitted and control ends.

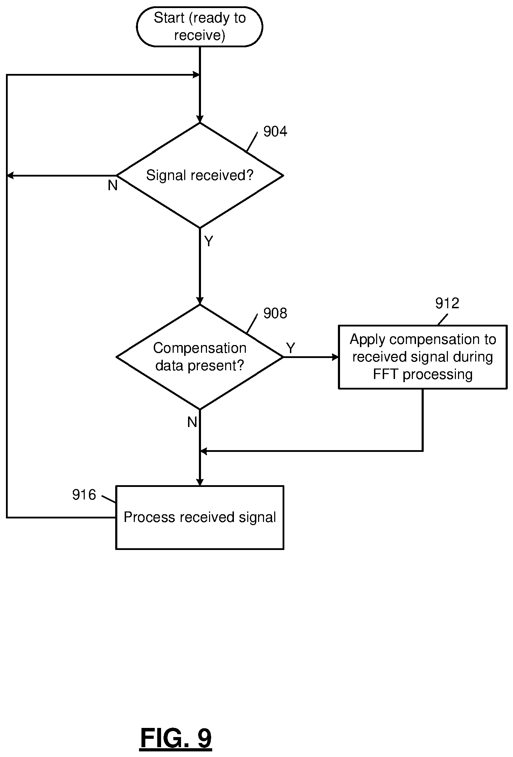

FIG. 9 is a flowchart of a method of determining and applying ultra-wideband compensation to a received signal. Control begins at 904 and determines whether a signal has been received. If no signal has been received, control remains at 904. If a signal has been received control transfers to 908. At 908, control determines whether the signal compensation data is present. If the compensation data is present control transfers to 912 and applies the compensation. If the compensation data has not been received, control transfers to 916 and performs additional signal processing. After 916 control returns to 904.

## CLAUSES

Various example embodiments of the invention are described in the following clauses.

Clause 1: A method comprising:

determining a line length of an antenna channel;

based on the line length, determining a phase response of a signal associated with the antenna channel;

determining whether the phase response has met a set of linearization criteria;

in response to a determination that the phase response has met the set of linearization criteria, applying a linear shift to the phase response; and

selectively applying a compensation adjustment to the signal.

Clause 2: The method of clause 1 further comprising:

determining whether the signal is a first signal type or a second signal type; and

in response to a determination that the signal is the first signal type, applying the compensation adjustment to the signal by encoding the signal with the compensation adjustment before the signal is transmitted.

Clause 3: The method of clause 2 further comprising, in response to a determination that the signal is the second signal type, applying the compensation adjustment to the signal by:

determining, before transmitting the signal, whether an antenna associated with the antenna channel has met a set of transmission criteria,

in response to a determination that the antenna has met the set of transmission criteria, applying the compensation adjustment during FFT processing, and

in response to a determination that the antenna has not met the set of transmission criteria, applying the compensation adjustment by applying a circular shift.

Clause 4: The method of clause 3 wherein the set of transmission criteria includes a criterion that is met when a radar system associated with the antenna channel is a time division multiplexing system.

Clause 5: The method of any of clauses 2-4 wherein:

the first signal type is an ultra-wideband (UWB) slow-time signal and

the second signal type is an UWB fast-time signal.

Clause 6: The method of clause 5 wherein:

a UWB slow-time signal includes a first set of signal pulses, and

each pulse of the first set of signal pulses:

is a first duration,

is separated by a second duration,

begins at a first frequency, and

ends at a second frequency.

Clause 7: The method of any of clauses 5-6 wherein:

a UWB fast-time signal includes a second set of signal pulses, and

each pulse of the second set of signal pulses:

is a third duration,

is separated by a fourth duration, and

is a different frequency than a previous pulse.

Clause 8: The method of any of clauses 1-7 wherein the line length is a length of a routing line of a radar system and antenna radiator.

Clause 9: The method of any of clauses 1-8 wherein the set of linearization criteria includes at least one of:

a criterion that is met when a phase response is not linear, or

a change in wavelength of the signal is not linear.

Clause 10: The method of any of clauses 1-9 wherein:

the antenna channel is part of a radar antenna, and
the signal is transmitted and received by the antenna channel.

Clause 11: The method of any of clauses 1-10 wherein linearization includes:

performing an FFT, and
performing a least square estimate.

Clause 12: The method of any of clauses 1-4 wherein the compensation adjustment aligns signals of the antenna channel and the signals of a second antenna channel.

Clause 13: The method of any of clauses 1-12 further comprising receiving the signal.

Clause 14: A non-transitory computer-readable medium comprising processor-executable instructions, wherein the instructions implement the method of any one of clauses 1-12.

Clause 15: A system comprising:

memory hardware configured to store instructions; and
processor hardware configured to execute instructions stored by the memory hardware, wherein the instructions implement the method of any one of clauses 1-12.

**CONCLUSION**

The foregoing description is merely illustrative in nature and is in no way intended to limit the disclosure, its application, or uses. The broad teachings of the disclosure can be implemented in a variety of forms. Therefore, while this disclosure includes particular examples, the true scope of the disclosure should not be so limited since other modifications will become apparent upon a study of the drawings, the specification, and the following claims. In the written description and claims, one or more steps within a method may be executed in a different order (or concurrently) without altering the principles of the present disclosure. Similarly, one or more instructions stored in a non-transitory computer-readable medium may be executed in a different order (or concurrently) without altering the principles of the present disclosure. Unless indicated otherwise, numbering or other labeling of instructions or method steps is done for convenient reference, not to indicate a fixed order.

Further, although each of the embodiments is described above as having certain features, any one or more of those features described with respect to any embodiment of the disclosure can be implemented in and/or combined with features of any of the other embodiments, even if that combination is not explicitly described. In other words, the described embodiments are not mutually exclusive, and permutations of one or more embodiments with one another remain within the scope of this disclosure.

Spatial and functional relationships between elements (for example, between modules, circuit elements, semiconductor layers, etc.) are described using various terms, including "connected," "engaged," "coupled," "adjacent," "next to," "on top of," "above," "below," and "disposed." Unless explicitly described as being "direct," when a relationship between first and second elements is described in the above disclosure, that relationship encompasses a direct relationship where no other intervening elements are present between the first and second elements as well as an indirect relationship where one or more intervening elements are present between the first and second elements.

As noted below, the term "set" generally means a grouping of one or more elements. However, in various implementations a "set" may, in certain circumstances, be the empty set (in other words, the set has zero elements in those circumstances). As an example, a set of search results resulting from a query may, depending on the query, be the empty set. In contexts where it is not otherwise clear, the term "non-empty set" can be used to explicitly denote exclusion of the empty set - that is, a non-empty set will always have one or more elements.

A "subset" of a first set generally includes some of the elements of the first set. In various implementations, a subset of the first set is not necessarily a proper subset: in certain circumstances, the subset may be coextensive with (equal to) the first set (in other words, the subset may include the same elements as the first set). In contexts where it is not otherwise clear, the term "proper subset" can be used to explicitly denote that a subset of the first set must exclude at least one of the elements of the first set. Further, in various implementations, the term "subset" does not necessarily exclude the empty set. As an example, consider a set of candidates that was selected based on first criteria and a subset of the set of candidates that was selected based on second criteria; if no elements of the set of candidates met the second criteria, the subset may be the empty set. In contexts where it is not otherwise clear, the term "non-empty subset" can be used to explicitly denote exclusion of the empty set.

In the figures, the direction of an arrow, as indicated by the arrowhead, generally demonstrates the flow of information (such as data or instructions) that is of interest to the illustration. For example, when element A and element B exchange a variety of information but information transmitted from element A to element B is relevant to the illustration, the arrow may point from element A to element B. This unidirectional arrow does not imply that no other information is transmitted from element B to element A. Further, for information sent from element A to element B, element B may send requests for, or receipt acknowledgements of, the information to element A.

In this application, including the definitions below, the term "module" can be replaced with the term "controller" or the term "circuit." In this application, the term "controller" can be replaced with the term "module." The term "module" may refer to, be part of, or include: an Application Specific Integrated Circuit (ASIC); a digital, analog, or mixed analog/digital discrete circuit; a digital, analog, or mixed analog/digital integrated circuit; a combinational logic circuit; a field programmable gate array (FPGA); processor hardware (shared, dedicated, or group) that executes code; memory hardware (shared, dedicated, or group) that is coupled with the processor hardware and stores code executed by the processor hardware; other suitable hardware components that provide the described functionality; or a combination of some or all of the above, such as in a system-on-chip.

The module may include one or more interface circuits. In some examples, the interface circuit(s) may implement wired or wireless interfaces that connect to a local area network (LAN) or a wireless personal area network (WPAN). Examples of a LAN are Institute of Electrical and Electronics Engineers (IEEE) Standard 802.11-2020 (also known as the WIFI wireless networking standard) and IEEE Standard 802.3-2018 (also known as the ETHERNET wired networking standard). Examples of a WPAN are IEEE Standard 802.15.4 (including the ZIGBEE standard from the ZigBee Alliance) and, from the Bluetooth Special Interest Group (SIG), the BLUETOOTH wireless networking standard (including Core Specification versions 3.0, 4.0, 4.1, 4.2, 5.0, and 5.1 from the Bluetooth SIG).

The module may communicate with other modules using the interface circuit(s). Although the module may be depicted in the present disclosure as logically communicating directly with other modules, in various implementations the module may actually communicate via a communications system. The communications system includes physical and/or virtual networking equipment such as hubs, switches, routers, and gateways. In some implementations, the communications system connects to or traverses a wide area network (WAN) such as the Internet. For example, the communications system may include multiple LANs connected to each other over the Internet or point-to-point leased lines using technologies including Multiprotocol Label Switching (MPLS) and virtual private networks (VPNs).

In various implementations, the functionality of the module may be distributed among multiple modules that are connected via the communications system. For example, multiple modules may implement the same functionality distributed by a load balancing system. In a further example, the functionality of the module may be split between a server (also known as remote, or cloud) module and a client (or, user) module. For example, the client module may include a native or web application executing on a client device and in network communication with the server module.

Some or all hardware features of a module may be defined using a language for hardware description, such as IEEE Standard 1364-2005 (commonly called "Verilog") and IEEE Standard 1076-2008 (commonly called "VHDL"). The hardware description language may be used to manufacture and/or program a hardware circuit. In some implementations, some or all features of a module may be defined by a language, such as IEEE 1666-2005 (commonly called "SystemC"), that encompasses both code, as described below, and hardware description.

The term code, as used above, may include software, firmware, and/or microcode, and may refer to programs, routines, functions, classes, data structures, and/or objects. Shared processor hardware encompasses a single microprocessor that executes some or all code from multiple modules. Group processor hardware encompasses a microprocessor that, in combination with additional microprocessors, executes some or all code from one or more modules. References to multiple microprocessors encompass multiple microprocessors on discrete dies, multiple microprocessors on a single die, multiple cores of a single microprocessor, multiple threads of a single microprocessor, or a combination of the above.

The memory hardware may also store data together with or separate from the code. Shared memory hardware encompasses a single memory device that stores some or all code from multiple modules. One example of shared memory hardware may be level 1 cache on or near a microprocessor die, which may store code from multiple modules. Another example of shared memory hardware may be persistent storage, such as a solid state drive (SSD) or magnetic hard disk drive (HDD), which may store code from multiple modules. Group memory hardware encompasses a memory device that, in combination with other memory devices, stores some or all code from one or more modules. One example of group memory hardware is a storage area network (SAN), which may store code of a particular module across multiple physical devices. Another example of group memory hardware is random access memory of each of a set of servers that, in combination, store code of a particular module. The term memory hardware is a subset of the term computer-readable medium.

The apparatuses and methods described in this application may be partially or fully implemented by a special-purpose computer created by configuring a general-purpose computer to execute one or more particular functions embodied in computer programs. Such apparatuses and methods may be described as computerized or computer-implemented apparatuses and methods. The functional blocks and flowchart elements described above serve as software specifications, which can be translated into the computer programs by the routine work of a skilled technician or programmer.

The computer programs include processor-executable instructions that are stored on at least one non-transitory computer-readable medium. The computer programs may also include or rely on stored data. The computer programs may encompass a basic input/output system (BIOS) that interacts with hardware of the special-purpose computer, device drivers that interact with particular devices of the special-purpose computer, one or more operating systems, user applications, background services, background applications, etc.

The computer programs may include: (i) descriptive text to be parsed, such as HTML (hypertext markup language), XML (extensible markup language), or JSON (JavaScript Object Notation), (ii) assembly code, (iii) object code generated from source code by a compiler, (iv) source code for execution by an interpreter, (v) source code for compilation and execution by a just-in-time compiler, etc. As examples only, source code may be written using syntax from languages including C, C++, C#, Objective-C, Swift, Haskell, Go, SQL, R, Lisp, Java®, Fortran, Perl, Pascal, Curl, OCaml, Java-Script®, HTML5 (Hypertext Markup Language 5th revision), Ada, ASP (Active Server Pages), PHP (PHP: Hypertext Preprocessor), Scala, Eiffel, Smalltalk, Erlang, Ruby, Flash®, Visual Basic®, Lua, MATLAB, SIMULINK, and Python®.

The term non-transitory computer-readable medium does not encompass transitory electrical or electromagnetic signals propagating through a medium (such as on a carrier wave). Non-limiting examples of a non-transitory computer-readable medium are nonvolatile memory circuits (such as a flash memory circuit, an erasable programmable read-only memory circuit, or a mask read-only memory circuit), volatile memory circuits (such as a static random access memory circuit or a dynamic random access memory circuit), magnetic storage media (such as an analog or digital magnetic tape or a hard disk drive), and optical storage media (such as a CD, a DVD, or a Blu-ray Disc).

The term "set" generally means a grouping of one or more elements. The elements of a set do not necessarily need to have any characteristics in common or otherwise belong together. The phrase "at least one of A, B, and C" should be construed to mean a logical (A OR B OR C), using a non-exclusive logical OR, and should not be construed to mean "at least one of A, at least one of B, and at least one of C." The phrase "at least one of A, B, or C" should be construed to mean a logical (A OR B OR C), using a non-exclusive logical OR.

**Claims**

1. A method comprising:

   determining a line length of an antenna channel;
   based on the line length, determining a phase response of a signal associated with the antenna channel;
   determining whether the phase response has met a set of linearization criteria;
   in response to a determination that the phase response has met the set of linearization criteria, applying a linear shift to the phase response;
   determining whether the signal is a first signal type or a second signal type;
   in response to a determination that the signal is the first signal type, applying a compensation adjustment to the signal by encoding the signal with the compensation adjustment before the signal is transmitted; and
   in response to a determination that the signal is the second signal type, applying the compensation adjustment to the signal by:

      determining, before transmitting the signal, whether an antenna associated with the antenna channel has met a set of transmission criteria,
      in response to a determination that the antenna has met the set of transmission criteria, applying the compensation adjustment during FFT processing, and
      in response to a determination that the antenna has not met the set of transmission criteria, applying the compensation adjustment by applying a circular shift.

2. The method of claim 1 wherein:

   the first signal type is an ultra-wideband (UWB) slow-time signal, and
   the second signal type is an UWB fast-time signal.

3. The method of claim 2 wherein:

a UWB slow-time signal includes a first set of signal pulses, and
each pulse of the first set of signal pulses:

is a first duration,
is separated by a second duration,
begins at a first frequency, and
ends at a second frequency.

4. The method of claim 2 or claim 3 wherein:

a UWB fast-time signal includes a second set of signal pulses, and
each pulse of the second set of signal pulses:

is a third duration,
is separated by a fourth duration, and
is a different frequency than a previous pulse.

5. The method of any one of the preceding claims wherein the line length is a length of a routing line of a radar system and antenna radiator.

6. The method of any one of the preceding claims, wherein the set of linearization criteria includes at least one of:

a criterion that is met when a phase response is not linear, or
a change in wavelength of the signal is not linear.

7. The method of any one of the preceding claims wherein:

the antenna channel is part of a radar antenna, and
the signal is transmitted and received by the antenna channel.

8. The method of any one of the preceding claims wherein linearization includes:

performing an FFT, and
performing a least square estimate.

9. The method of any one of the preceding claims, wherein the set of transmission criteria includes a criterion that is met when a radar system associated with the antenna channel is a time division multiplexing system.

10. The method of any one of the preceding claims. wherein the compensation adjustment aligns signals of the antenna channel and the signals of a second antenna channel.

11. A method comprising:

receiving a signal;
determining a line length of an antenna channel associated with the signal;
based on the line length, determining a phase response of the signal;
determining whether the phase response has met a set of linearization criteria;
in response to a determination that the phase response has met the set of linearization criteria, applying a linear shift to the phase response; and
applying a compensation adjustment based on the phase response to the signal.

12. A system comprising:

memory hardware configured to store instructions;
processor hardware configured to execute the instructions, which, when executed, cause the method of any one of claims 1 to 11 to be performed.

13. The system of claim 12 wherein:

the antenna channel is part of a radar antenna,
the signal is transmitted and received by the antenna channel, and
linearization includes:

performing an FFT, and
performing a least square estimate.

14. A computer program comprising processor-executable instructions which, when executed by one or more processors, cause the method of any one of claims 1 to 11 to be performed.

Radar System

112

108

Radar System 108

Antenna Array 136

Transceiver 140

Processor Hardware 144

Memory Hardware 148

Radar Software
152

# FIG. 1

Ultra-wideband (UWB) in fast-
time

frequency

· · ·

time

**FIG. 2**

UWB in slow-time – ascending
step frequency waveform

frequency

· · ·

time

**FIG. 3A**

UWB in slow-time –
descending frequency
waveform

frequency

· · ·

time

**FIG. 3B**

$|\mathcal{F}\{a_1(\theta,k)\}|$

$$d_1 \frac{\Delta f}{c} \sin(\theta) + \frac{\Delta f}{c} L_1$$

Frequency (Doppler Domain)

$|\mathcal{F}\{a_2(\theta,k)\}|$

$$d_2 \frac{\Delta f}{c} \sin(\theta) + \frac{\Delta f}{c} L_2$$

Frequency (Doppler Domain)

⋮          ⋮          ⋮

$|\mathcal{F}\{a_{\mathrm{MN}}(\theta,k)\}|$

$$d_{MN} \frac{\Delta f}{c} \sin(\theta) + \frac{\Delta f}{c} L_{MN}$$

Frequency (Doppler Domain)

## FIG. 4

**Change in Wavelength
Between Consecutive Chirps
In Different Media**

**FFT Spectrum of Phase Shift in Different Media**

**FIG. 5**

Before
Linearization

Frequency (Doppler domain)

After
Linearization

Frequency (Doppler domain)

**FIG. 6**

**FIG. 7**

**FIG. 8**

Start (ready to receive)

904

Signal received?

N

Y

908

Compensation data present?

912

Apply compensation to received signal during FFT processing

Y

N

916

Process received signal

**FIG. 9**

Europäisches
Patentamt
European
Patent Office
Office européen
des brevets

## EUROPEAN SEARCH REPORT

**Application Number**

EP 25 17 6121

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 5 952 955 A (KENNEDY THOMAS A [US] ET AL) 14 September 1999 (1999-09-14)<br>* abstract *<br>* column 1, lines 5-40 *<br>* column 2, line 24 - column 3, line 54; figure 1 *<br>----- | 1-14 | INV.<br>G01S7/40<br>G01S13/02<br>G01S13/931 |
| A | US 2021/194115 A1 (WINTERMANTEL MARKUS [DE]) 24 June 2021 (2021-06-24)<br>* abstract *<br>* paragraph [0038]; figure 7 *<br>----- | 1-14 | |
| A | US 2017/131392 A1 (SCHOOR MICHAEL [DE] ET AL) 11 May 2017 (2017-05-11)<br>* abstract *<br>* paragraph [0007]; figure 1 *<br>----- | 1-14 | |

**TECHNICAL FIELDS SEARCHED (IPC)**

G01S
H01Q

The present search report has been drawn up for all claims

| Place of search | Date of completion of the search | Examiner |
|---|---|---|
| Munich | 6 October 2025 | van Norel, Jan |

EPO FORM 1503 03.82 (P4C01)

## ANNEX TO THE EUROPEAN SEARCH REPORT
## ON EUROPEAN PATENT APPLICATION NO.

EP 25 17 6121

This annex lists the patent family members relating to the patent documents cited in the above-mentioned European search report.
The members are as contained in the European Patent Office EDP file on
The European Patent Office is in no way liable for these particulars which are merely given for the purpose of information.

06-10-2025

| Patent document cited in search report | | Publication date | Patent family member(s) | | Publication date |
|---|---|---|---|---|---|
| US 5952955 | A | 14-09-1999 | NONE | | |
| US 2021194115 | A1 | 24-06-2021 | CN | 112042053 A | 04-12-2020 |
| | | | DE | 102018215393 A1 | 12-03-2020 |
| | | | EP | 3850705 A1 | 21-07-2021 |
| | | | JP | 7483622 B2 | 15-05-2024 |
| | | | JP | 2021535355 A | 16-12-2021 |
| | | | US | 2021194115 A1 | 24-06-2021 |
| | | | WO | 2020052719 A1 | 19-03-2020 |
| US 2017131392 | A1 | 11-05-2017 | CN | 106796283 A | 31-05-2017 |
| | | | DE | 102014212284 A1 | 31-12-2015 |
| | | | EP | 3161514 A1 | 03-05-2017 |
| | | | JP | 6533288 B2 | 19-06-2019 |
| | | | JP | 2017522576 A | 10-08-2017 |
| | | | US | 2017131392 A1 | 11-05-2017 |
| | | | WO | 2015197226 A1 | 30-12-2015 |

EPO FORM P0459

**EP 4 653 911 A1**

REFERENCES CITED IN THE DESCRIPTION

**Patent documents cited in the description**

- US 63649722